# EUROPEAN PATENT APPLICATION

(11) **EP 3 502 657 A1**
(43) Date of publication of application: **26.06.2019**
(21) Application number: 17841570.9
(22) Date of filing: 18.08.2017
(51) Int. Cl.: G01N 13/00

(54) **SUBSTANCE WETTABILITY ASSESSMENT METHOD AND ASSESSMENT DEVICE**

(30) Priority: 19.08.2016 JP 2016161465
(71) Applicant: Riken, Wako-shi, Saitama 351-0198 (JP); Kitagawa Iron Works Co., Ltd, Fuchu-shi, Hiroshima 726-8610 (JP)
(72) Inventor: TANAKA Nobuyuki, Wako-shi Saitama 351-0198 (JP); NAKANISHI Yuki, Wako-shi Saitama 351-0198 (JP); TAKAHARA Junko, Wako-shi Saitama 351-0198 (JP); AWAZU Akane, Wako-shi Saitama 351-0198 (JP); TANAKA Yo, Wako-shi Saitama 351-0198 (JP); HARUZONO Yoshihide, Fuchu-shi Hiroshima 726-8610 (JP); NASU Hiromitsu, Fuchu-shi Hiroshima726-8610 (JP)
(74) Representative: Dehns
(86) International application number: PCT/JP2017/029670
(87) International publication number: WO 2018/034349

(57) **Abstract**

A new method capable of evaluating wettability of a surface of a material is provided.

The method includes the following: applying a gas jet to a surface of a material that is covered with a liquid so as to squeeze the liquid; imaging a surface of a liquid film formed on the surface of the material after squeezing the liquid; and evaluating wettability of the material based on the presence or absence of interference fringes on the surface of the liquid film.

## Description

### Technical Field

The present disclosure relates to a method for evaluating wettability of a material and a device capable of evaluating wettability of a material.

### Background Art

In the development of industrial products and quality control, it is very important to quantitatively evaluate the properties of surfaces and interfaces of materials. One of the methods for evaluating the surface properties of materials is to examine the physicochemical interaction between the surface of a material and a liquid in contact with the material. In this technique, wettability is found to be closely associated with not only hydrophilicity and hydrophobicity, but also adhesiveness, releasability, and antifouling properties. Thus, wettability is a very significant factor for both design and quality control.

The wettability of a material may be evaluated by known methods such as a contact angle method, a captive bubble method, and a Wilhelmy method. In the contact angle method, a droplet is formed on the surface of a material (an object) to be evaluated, and the contact angle between the droplet and the surface of the object is measured. In the captive bubble method, an object is immersed in a liquid with its surface facing downward, a bubble of air or the like is supplied from under the object and allowed to adhere to the surface of the object, and then the contact angle is measured. In the Wilhelmy method, the surface tension at the interfaces between solid, liquid, and gas phases is measured.

The present inventors have proposed a method for evaluating wettability of a cell sheet (Patent Document 1). The method includes the following: covering a surface of a material (an object) to be evaluated with a liquid; removing the liquid jetting a gas at the surface of the object; and measuring a dimension of the region where the liquid is removed after gas jetting.

### Prior Art Documents

### Patent Documents

Patent Document 1: WO 2013/176264

### Disclosure of Invention

### Problem to be Solved by the Invention

However, there is a wide variety of materials whose wettability is to be evaluated, and in some cases the conventional evaluation methods are not sufficient to evaluate the surface wettability of the material.

In view of the above, the present disclosure relates to a new assessment method capable of evaluating wettability of a surface of a material, and an assessment device used in the method.

### Means for Solving Problem

One aspect of the present disclosure relates to a method for evaluating wettability of a material. The method includes the following: applying a gas jet to a surface of a material that is covered with a liquid so as to squeeze the liquid; imaging a surface of a liquid film formed on the surface of the material after squeezing the liquid; and evaluating wettability of the material based on the presence or absence of interference fringes on the surface of the liquid film.

One aspect of the present disclosure relates to a method for evaluating wettability of a material. The method includes the following: applying a gas jet to a surface of a material that is covered with a liquid so as to squeeze the liquid; imaging interference fringes of a liquid film formed on the surface of the material after squeezing the liquid; and evaluating wettability of the material based on the interference fringes.

One aspect of the present disclosure relates to a method for evaluating wettability of a material. The method includes the following: applying a gas jet to a surface of a material that is covered with a liquid so as to squeeze the liquid; imaging an area in which the liquid is squeezed, and interference fringes of a liquid film formed on the surface of the material after squeezing the liquid; calculating a correlation between the liquid squeezed area and the interference fringes based on the image data; and evaluating wettability of the material based on the correlation.

One aspect of the present disclosure relates to a device for evaluating wettability of a material by the evaluation method of the present disclosure. The device includes the following: a means for applying the gas jet; a means for imaging interference fringes on the surface of the material where the liquid is squeezed by the application of the gas jet; and a light source. The optical axis of the light source coincides with the optical axis of the imaging means or the axis of the nozzle.

One aspect of the present disclosure relates to a method for evaluating properties of a surface of a material. The method includes the following: applying a gas jet to a surface of a material that is covered with a liquid so as to squeeze the liquid; imaging a surface of a liquid film formed on the surface of the material after squeezing the liquid; stopping the application of the gas jet; repeating a series of processes of applying the gas jet to squeeze the liquid, imaging the surface of the liquid film, and stopping the application of the gas jet in this order; and evaluating a change or durability of a treated film that is provided on the surface (e.g., film formed by treating the surface) of the material based on the imaging thus performed.

### Effects of the Invention

One aspect of the present disclosure can provide a new method capable of evaluating wettability of a surface of a material.

### Brief Description of Drawings

FIG. 1 is an example of an image of a measuring device used in Example 1.
FIG. 2 is an example of an image showing the results of the wettability assessment in Example 1.
FIG. 3 is an example of images showing the results of the wettability assessment in Example 2.
FIG. 4 is an image of a dish used in Example 3.
FIG. 5 is an example of an image showing the results of the wettability assessment in Example 3.
FIG. 6 is an example of images showing the results of the wettability assessment in Example 4.

### Description of the Invention

The present disclosure is based on the new findings that when a gas jet is applied to the surface of a material that is covered with a liquid, the liquid is squeezed, leaving an area where interference fringes can be produced depending on the wettability of the material. The present disclosure is based on the new findings that the wettability can be assessed in accordance with the size, pattern, etc. of the interference fringes thus produced.

The mechanism for assessing the wettability with the method of the present disclosure is still not clear, but may be assumed as follows.

The application of a gas jet to the surface of a material that is covered with a liquid can squeeze the liquid on the surface of the material. At this time, a liquid film is held in a portion where the surface of the material appears to be exposed after the liquid has been squeezed. The liquid film has a very small thickness, and the thickness depends on the wettability of the material. Moreover, interference fringes dependent on the wettability of the material are produced on the surface of the liquid film. Therefore, the wettability can be assessed by the presence or absence of interference fringes and the size, pattern, etc. of the interference fringes. However, the present disclosure should not be interpreted according to the above mechanism alone.

### [Evaluation method of wettability]

One aspect of the present disclosure relates to a method for evaluating wettability of a material (referred to as an evaluation method of the present disclosure). The method includes applying a gas jet to the surface of a material that is covered with a liquid so as to squeeze the liquid.

A first aspect of the evaluation method of the present disclosure includes the following: applying a gas jet to the surface of a material that is covered with a liquid so as to squeeze the liquid; imaging the surface of a liquid film formed on the surface of the material after squeezing the liquid; and evaluating wettability of the material based on the presence or absence of interference fringes on the surface of the liquid film.

A second aspect of the evaluation method of the present disclosure includes the following: imaging interference fringes of a liquid film formed on the surface of the material after squeezing the liquid; and evaluating wettability of the material based on the interference fringes.

A third aspect of the evaluation method of the present disclosure includes the following: imaging an area in which the liquid is squeezed, and interference fringes of a liquid film formed on the surface of the material after squeezing the liquid; calculating a correlation between the liquid squeezed area and the interference fringes based on the image data; and evaluating wettability of the material based on the correlation.

In one or more embodiments, the evaluation method of the present disclosure can perform a non-contact assessment of the wettability of the material to be evaluated in a non-contact manner. In one or more embodiments, the evaluation method of the present disclosure can visually determine the wettability of the material. In one or more embodiments, the evaluation method of the present disclosure can detect the presence or absence of a surface treatment such as metal film formation. In one or more embodiments, the evaluation method of the present disclosure can detect unevenness in the surface treatment of the material such as uneven film formation.

### [Squeeze of liquid]

The evaluation method of the present disclosure includes applying a gas jet to the surface of a material that is covered with a liquid, and squeezing the liquid covering the surface of the material by the application of the gas jet.

The type of the liquid covering the surface of the material is not particularly limited. In one or more embodiments, the liquid may be an aqueous medium. In one or more embodiments, the aqueous medium may consist of water or may contain water and other components. In one or more embodiments, the aqueous medium may be, e.g., water, a buffer solution, or a liquid culture medium. In one or more embodiments, water may be, e.g., distilled water, ion exchanged water, or ultrapure water. In other non-limiting embodiments, the liquid may be an organic solvent. In one or more embodiments, the organic solvent may be, e.g., diiodomethane or n-hexadecane.

In one or more embodiments, the liquid may be disposed to cover the entire surface of the material to be evaluated. The thickness of the liquid covering the surface of the material is not particularly limited and may be appropriately determined in accordance with the material to be evaluated. In one or more embodiments, the thickness of the liquid is 0.5 mm to 5 mm. The thickness of the liquid covering the surface of the material may be either uniform or non-uniform.

The type of gas to be applied to the material is not particularly limited and may be appropriately determined in accordance with various conditions such as the quality of the material to be evaluated and the type of the liquid covering the material. In one or more embodiments, it is preferable that the gas does not adversely affect the material. In one or more embodiments, the gas may be air and inert gases such as nitrogen and argon. The gas may be used after sterilization or may be used without sterilization.

The amount of gas jet applied (i.e., the pressure of the gas jet) may be appropriately determined in accordance with various conditions such as the quality of the material to be evaluated, the type of the liquid covering the material, and the thickness of the liquid. In one or more embodiments, the pressure of the gas jet is 1 kPa to 50 kPa.

In one or more embodiments, the gas jet may be applied from above, vertically above, or obliquely above the material to be evaluated. In one or more embodiments, it is preferable that the gas jet is applied from substantially vertically above the material so that the distribution of the wettability is evaluated with higher accuracy.

In one or more embodiments, the application of gas jet may be directed to substantially the center of the material to be evaluated. Alternatively, the gas jet may be directed to an area other than the center of the material.

In one or more embodiments, the application of the gas jet may be performed only at one position or may be performed at different positions in a scanning manner.

In one or more embodiments, the application of gas jet may be applied once or twice or more. In one or more embodiments, the gas jet may be applied continuously or intermittently. In one or more embodiments, the gas jet may be applied for 0.1 second to 5 seconds.

The method for applying the gas jet is not particularly limited. In one or more embodiments, a suitable unit for applying the gas jet may be used. In one or more embodiments, the unit for applying the gas jet may include a gas discharge portion and a gas supply portion, which can be combined as appropriate. In one or more embodiments, the gas discharge portion may be, e.g., a gas nozzle. In one or more embodiments, the gas supply portion may be, e.g., a compressor or a gas cylinder. The gas discharge portion and the gas supply portion are connected via an appropriate gas flow path, and thus the gas jet can be forced through the gas discharge portion. A filter such as a particle filter may be located between the gas discharge portion and the gas supply portion in order to remove fine dust from the gas to be applied and reduce contamination of the material to be evaluated. The inner diameter of the gas nozzle may be appropriately determined in accordance with various conditions such as the amount of gas applied. In one or more embodiments, the inner diameter of the gas nozzle is 10 µm to 500 µm. The distance of gas jet applied (i.e., the distance from the surface of a liquid film to the end of the gas discharge portion (e.g., the end of the nozzle)) may be appropriately determined in accordance with various conditions such as the amount of gas applied. In one or more embodiments, the distance is 0.5 mm to 5 mm.

The application of the gas jet can be controlled by a suitable unit for controlling the flow of gas. In one or more embodiments, the application of the gas jet can be controlled by combining a regulator and a solenoid valve as appropriate. The application of the gas jet may be controlled automatically or manually. For example, the application of the gas jet can be automatically controlled by controlling the regulator and the solenoid valve with a computer.

### [Imaging of surface of liquid film / interference fringes]

The evaluation method of the present disclosure includes imaging the surface of a liquid film formed on the surface of the material after squeezing the liquid by the application of the gas jet.

The "liquid film formed on the surface of the material" in the context of the present disclosure means a film that is formed of the liquid remaining on the surface of the material during the application of the gas jet to squeeze the liquid on the surface of the material. In one or more embodiments, the liquid film may be either uniform or non-uniform. In one or more embodiments, interference fringes can be produced on the surface of the liquid film depending on, e.g., the wettability of the surface of the material. Thus, the evaluation method of the present disclosure may include imaging the interference fringes of the liquid film instead of imaging the surface of the liquid film.

In one or more embodiments, the surface of the liquid film or the interference fringes may be imaged during or after the application of the gas jet. In one or more embodiments, the imaging may be performed at any time from before the start of the application of the gas jet until the end of the application of the gas jet. Alternatively, the imaging may be performed at any time from immediately after the start of the application of the gas jet until the end of the application of the gas jet. Moreover, the imaging may be continuously performed after the end of the application of the gas jet. Further, the imaging may be performed when the liquid squeezed area reaches an equilibrium state.

In one or more embodiments, the evaluation method of the present disclosure may include imaging the area in which the liquid is squeezed as well as imaging the surface of the liquid film or the interference fringes. In one or more embodiments, since the area in which the liquid is squeezed is imaged along with the surface of the liquid film or the interference fringes, it is possible to achieve not only highly accurate evaluation of the wettability, but also multifaceted evaluation. The "area in which the liquid is squeezed (i.e., the liquid squeezed area)" in the context of the present disclosure means a range where the liquid is pushed aside from the surface of the material or a portion of the material that is exposed by the application of the gas jet to the surface of the material that is covered with the liquid.

In one or more embodiments, the imaging may be performed continuously or intermittently. In one or more embodiments, the imaging may be performed once or twice or more. In one or more embodiments, the imaging may be performed automatically or manually.

In one of more embodiments, the evaluation method of the present disclosure may include moving the position of the application of the gas jet to scan the entire surface of the material and imaging the interference fringes at each position in order to detect unevenness in the surface treatment.

In one or more embodiments, the imaging may be performed with equipment capable of detecting light such as visible light, infrared light, or ultraviolet light. In one or more embodiments, the equipment may be, e.g., a CCD camera, a CMOS camera, or a 3D scanner. A high definition camera is preferably used to evaluate the distribution of the wettability with higher accuracy.

In terms of evaluating the distribution of the wettability with higher accuracy, it is preferable that the imaging is performed while the material to be evaluated is being irradiated with light. In terms of evaluating the distribution of the wettability with higher accuracy, it is preferable that the optical axis of a light source that emits the light coincides with the optical axis of an imaging unit or the axis of a nozzle that discharges the gas jet. The light source is not particularly limited and may be preferably an LED in terms of evaluating the distribution of the wettability with higher accuracy.

### [Evaluation of wettability]

The evaluation method of the present disclosure includes evaluating wettability of the material based on the imaging as described above.

In one or more embodiments, the wettability may be evaluated by, e.g., the presence or absence of interference fringes on the surface of the liquid film, the size and shape of the interference fringes produced, and the rate of movement of the interference fringes.

In one or more embodiments, when the liquid squeezed area is imaged along with the surface of the liquid film or the interference fringes, a correlation between the liquid squeezed area and the interference fringes may be calculated, and the wettability may be evaluated based on the correlation. In one or more embodiments, the correlation may be, e.g., a difference in size between the liquid squeezed area and the interference fringes, or the relationship between the rate of spread of the liquid squeezed area and the rate of spread of the interference fringes.

In one or more embodiments, the calculation of the correlation between the liquid squeezed area and the interference fringes may include, e.g., measuring the size, shape, rate of movement of perimeter, and curvature of the liquid squeezed area and measuring the size, shape, rate of movement, and curvature of the interference fringes.

In one or more embodiments, the "curvature of the liquid squeezed area" in the context of the present disclosure may be a curvature of the curved surface constituting the perimeter of the liquid squeezed area and may also be referred to as a curvature of the boundary between the portion of the material that is exposed after squeezing the liquid and the squeezed liquid. In terms of evaluating the distribution of the wettability with higher accuracy, when the perimeter of the liquid squeezed area detected has a plurality of curvatures such as waveform, each of the curvatures is preferably measured.

The material to be evaluated by the evaluation method of the present disclosure is not particularly limited, and any material that requires the evaluation of wettability may be used. In one or more embodiments, examples of the material include instruments and raw materials that are used in basic researches in chemistry, biology, drug discovery, etc. and that are used in medical care including regenerative medicine, and industrial products. In one or more embodiments, from the viewpoint of evaluating the material covered with a liquid, the material to be evaluated may be, e.g., a material from which a biofilm can be generated.

In one or more embodiments, the evaluation method of the present disclosure can evaluate a change, durability, or the like of a treated film (e.g., metal film) that is provided on the surface of the material by repeating a series of processes of (i) applying the gas jet to squeeze the liquid, (ii) imaging the interference fringes, and (iii) stopping the application of the gas jet in this order. When a predetermined time has passed after the application of the gas jet is stopped, the liquid squeezed area disappears and the surface of the material becomes covered with the liquid again. Alternatively, e.g., a liquid is added or the container is shaken to cover the surface of the material with the liquid again. In this state, once again the gas jet is applied and the interference fringes are imaged, so that a change, durability, or the like of the treated film that is provided on the surface (e.g., film formed by treating the surface) of the material can be evaluated.

In one or more embodiments, the present disclosure relates to the evaluation method that includes the following: applying a gas jet to the surface of a material that is covered with a liquid so as to squeeze the liquid; imaging the surface of a liquid film formed on the surface of the material after squeezing the liquid; stopping the application of the gas jet; repeating a series of processes of applying the gas jet to squeeze the liquid, imaging the surface of the liquid film, and stopping the application of the gas jet in this order; and evaluating a change or durability of a treated film (e.g., film formation) that is provided on the surface of the material based on the imaging thus performed. In one or more embodiments of this aspect, it is preferable that, from the second time onward, the gas jet is applied with the surface of the material being covered with the liquid. In one or more embodiments, this aspect includes applying the gas jet after imaging the interference fringes of the liquid film, followed by stopping the application of the gas jet, and then confirming that the liquid squeezed area is covered with the liquid due to the stopping of the gas jet. In one or more embodiments of this aspect, the position of the application of the gas jet is preferably fixed.

### [Production method including evaluation of wettability]

In other aspects, the present disclosure relates to a method for producing a material. The production method includes performing a hydrophilic treatment or a hydrophobic treatment on a material, and evaluating wettability of the material after the treatment. The wettability of the material is evaluated by the evaluation method of the present disclosure.

### [Evaluation device]

One aspect of the present disclosure relates to a device for evaluating wettability of a material (referred to as an evaluation device of the present disclosure) by the evaluation method of the present disclosure. The device includes the following: a unit for applying the gas jet; a unit for imaging interference fringes on the surface of the material where the liquid is squeezed by the application of the gas jet; and a light source. The optical axis of the light source and the optical axis of the imaging unit or the axis of the nozzle coincide with each other.

In one or more embodiments, the evaluation device of the present disclosure may include an analyzer for analyzing the images obtained by the imaging unit.

The present disclosure further relates to one or more non-limiting embodiments as follows.
[1] A method for evaluating wettability of a material, comprising:
   applying a gas jet to a surface of a material that is covered with a liquid so as to squeeze the liquid;
   imaging a surface of a liquid film formed on the surface of the material after squeezing the liquid; and
   evaluating wettability of the material based on the presence or absence of interference fringes on the surface of the liquid film.
[2] A method for evaluating wettability of a material, comprising:
   applying a gas jet to a surface of a material that is covered with a liquid so as to squeeze the liquid;
   imaging interference fringes of a liquid film formed on the surface of the material after squeezing the liquid; and
   evaluating wettability of the material based on the interference fringes.
[3] A method for evaluating wettability of a material, comprising:
   applying a gas jet to a surface of a material that is covered with a liquid so as to squeeze the liquid;
   imaging an area in which the liquid is squeezed, and interference fringes of a liquid film formed on the surface of the material after squeezing the liquid;
   calculating a correlation between the liquid squeezed area and the interference fringes based on the image data; and
   evaluating wettability of the material based on the correlation.
[4] The method according to any one of [1] to [3], wherein the imaging is performed during the application of the gas jet.
[5] The method according to any one of [1] to [4], wherein the imaging is performed while the material is being irradiated with light, and
   an optical axis of a light source that emits the light coincides with an optical axis of a means for performing the imaging or an axis of a nozzle that discharges the gas jet.
[6] A method for producing a material, comprising:
   evaluating wettability of a material by the method according to any one of [1] to [5].
[7] A device for evaluating wettability of a material by the method according to any one of [1] to [5],
   the device comprising:
   a means for applying the gas jet;
   a means for imaging interference fringes on the surface of the material where the liquid is squeezed by the application of the gas jet; and
   a light source,
   wherein the optical axis of the light source coincides with the optical axis of the imaging means or the axis of the nozzle.
[8] A method for evaluating properties of a surface of a material, comprising:
   applying a gas jet to a surface of a material that is covered with a liquid so as to squeeze the liquid;
   imaging a surface of a liquid film formed on the surface of the material after squeezing the liquid;
   stopping the application of the gas jet;
   repeating a series of processes of applying the gas jet to squeeze the liquid, imaging the surface of the liquid film, and stopping the application of the gas jet in this order; and
   evaluating a change or durability of a treated film that is provided on the surface of the material based on the imaging thus performed.

### Examples

Hereinafter, the present disclosure will be described in more detail by way of examples. However, the following examples are merely illustrative and are not intended to limit the present disclosure.

### (Example 1)

### [Wettability assessment]

Using the following device, the distribution of wettability on the surface of the following dish was evaluated.

### <Dish>

The surface of a dish (Product #430589, Becton, Dicinson and Company) (diameter: 60 mm, material: polystyrene, surface treatment: not treated) was subjected to a vacuum plasma treatment. Thus, the dish with a hydrophilic surface (contact angle: 67.6 degrees) was prepared.

### <Measuring device>

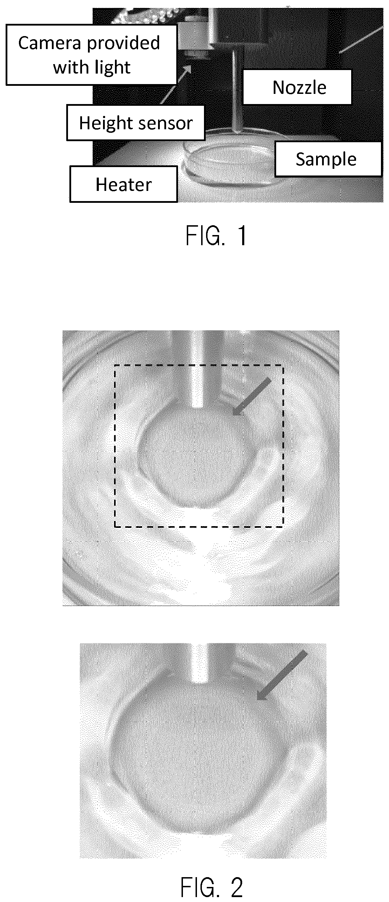

A measuring device having the configuration as shown in FIG. 1 was prepared. The camera was an industrial camera (the number of pixels: 4M pixels, element: 1" CMOS). The light source was an LED light. A nozzle with an inner diameter of 500 µm was used. In this example, the measuring device was installed so that the optical axis of the camera and the optical axis of the light source were coaxial with each other.

### <Measurement of interference fringes>

First, 3.3 ml of milliQ was placed in the dish (liquid thickness: 1.5 mm). Then, the nozzle was located above the center of the dish so that the distance between the surface of the dish and the end of the nozzle was 15 mm. An air jet was applied to the dish through the nozzle for 1 second. The applied pressure of the nozzle was 40 kPa. FIG. 2 shows the results.

FIG. 2 is an example of an image of the dish during the application of the air jet. The lower representation is a magnified image of a region surrounded by a dashed line in the upper representation.

As shown in FIG. 2, when the liquid was squeezed, interference fringes were observed on the surface of the liquid film formed on the surface of the material. Moreover, it was confirmed that the interference fringes spread out as time passed.

The same measurement was performed by using a dish that was not subjected to a hydrophilic treatment (contact angle: 81.8 degrees). Consequently, no interference fringes were observed.

The results indicated that the wettability of the material was able to be evaluated by applying a gas jet to the material covered with a liquid, imaging the area in which the liquid was squeezed by the application of the gas jet, and confirming the presence or absence of interference fringes.

### (Example 2)

### [Wettability assessment 2]

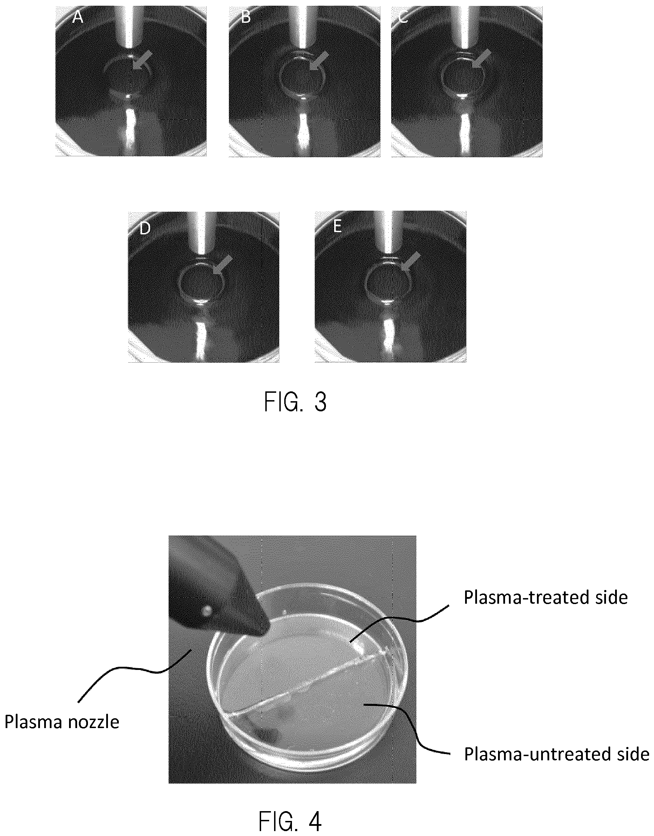

The assessment was performed in the same manner as Example 1 except that a dish (Product #430589, Becton, Dicinson and Company) (diameter: 60 mm, material: polystyrene, surface treatment: not treated) was used in which a silicon wafer (contact angle: 25.6 degrees) was placed. FIG. 4 shows the results.

FIG. 3 is an example of images showing changes in interference fringes over time during the application of the air jet. Like Example 1, all the images confirmed that the interference fringes were produced and spread out as time passed (i.e., a portion indicated by the arrow in FIG. 3).

The rate of spread of the interference fringes was faster in Example 2 than in Example 1. This may be attributed to the difference in wettability (contact angle) of the surface between the dishes.

The results indicated that the wettability of the material was able to be evaluated by applying a gas jet to the material covered with a liquid, imaging the area in which the liquid was squeezed by the application of the gas jet, and measuring the rate of spread of the interference fringes and the size of the interference fringes.

### (Example 3)

### [Wettability assessment 3]

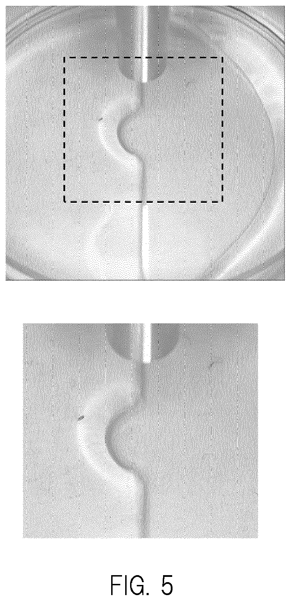

The assessment was performed in the same manner as Example 1 except that a dish with both a hydrophobic surface and a hydrophilic surface was used, as shown in FIG. 4. FIG. 5 shows the results.

### <Dish>

First, semicircular silicone rubber was attached to the surface of a dish (Product #430589, Becton, Dicinson and Company) (diameter: 60 mm, material: polystyrene, surface treatment: not treated), and then subjected to a hydrophilic treatment by spraying nitrogen gas plasma evenly over the surface of the dish. Subsequently, the silicone rubber was removed, so that the dish (FIG. 4) was prepared, having the surface on which the hydrophilic treatment was performed (i.e., the hydrophilic surface, contact angle: 75.2°) and the surface on which the hydrophilic treatment was not performed (i.e., the hydrophobic surface, contact angle: 87.8°).

FIG. 5 is an example of an image of the dish during the application of the air jet. The lower representation is a magnified image of a region surrounded by a dashed line in the upper representation.

In FIG. 5, the left half was the hydrophilic surface and the right half was the hydrophobic surface. As shown in FIG. 5, on the hydrophilic surface (the left half), semicircular interference fringes were observed in the liquid squeezed area. In contrast, on the hydrophobic surface (the right half), no interference fringes were observed. The results indicated that the wettability of the material was able to be evaluated by applying a gas jet to the material covered with a liquid, imaging the area in which the liquid was squeezed by the application of the gas jet, and measuring the interference fringes.

### (Example 4)

### [Wettability assessment 4]

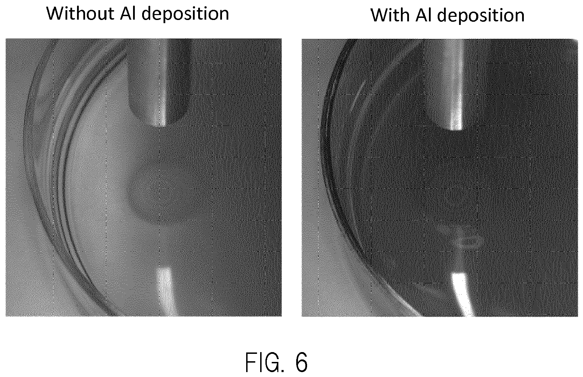

The assessment was performed in the same manner as Example 1 except that a dish with aluminum (Al) deposition or a dish without Al deposition was used, and the applied pressure of the nozzle was 10 kPa. FIG. 6 shows the results.

FIG. 6 is an example of images of the dishes during the application of the air jet (0.3 seconds after the start of the application of the air jet). In FIG. 6, the left image shows an example of the dish on which Al was not deposited, and the right image shows an example of the dish on which Al was deposited. As shown in FIG. 6, concentric interference fringes were produced in both dishes. The interference fringes were clearer and denser in the dish with Al deposition than in the dish without Al deposition. The results indicated that the presence or absence of a surface treatment such as metal deposition was able to be detected by applying a gas jet to the material covered with a liquid, imaging the area in which the liquid was squeezed by the application of the gas jet, and measuring the interference fringes.

### (Example 5)

### [Wettability assessment 5]

The assessment was performed in the same manner as Example 1 except that an Au film was formed on a dish, the applied pressure of the nozzle was 10 kPa, and the position of the application of the air jet was moved.

Despite the presence of the Au film on the surface of the dish, the shape and clearness of the interference fringes varied according to the position at which the air jet was applied. This may be attributed to the difference in wettability of the surface of the dish due to uneven formation of the Au film. The results indicated that the uneven film formation was able to be detected by applying a gas jet to the material covered with a liquid, imaging the area in which the liquid was squeezed by the application of the gas jet, and measuring the interference fringes.

Next, the assessment was performed in the same manner as described above except that the position of the application of the air jet was fixed, and the application and stopping of the air jet were repeated three times. From the second time onward, the air jet was applied after confirming that the surface of the material was covered with the liquid (i.e., the area in which the liquid had been squeezed by the previous application of the air jet was covered with the liquid) due to the stopping of the air jet.

It was confirmed that the shape of the interference fringes produced in the liquid squeezed area varied by repeating the application and stopping of the air jet. Specifically, the interference fringes were substantially in the form of concentric circles in the first round of the application of the air jet. However, from the second time onward, the circular shape of the interference fringes became distorted. Such a change in shape may be affected by peeling of the film or the formation of an oxide film with the lapse of time. The results indicated that the properties such as durability of the film was able to be detected by alternately repeating the application of a gas jet to the material covered with a liquid and the measurement of interference fringes by imaging the area in which the liquid was squeezed by the application of the gas jet.

## Claims

1. A method for evaluating wettability of a material, the method comprising:
applying a gas jet to a surface of a material that is covered with a liquid so as to squeeze the liquid;
imaging a surface of a liquid film formed on the surface of the material after squeezing the liquid; and
evaluating wettability of the material based on the presence or absence of interference fringes on the imaged surface of the liquid film.

2. A method for evaluating wettability of a material, the method comprising:
applying a gas jet to a surface of a material that is covered with a liquid so as to squeeze the liquid;
imaging interference fringes of a liquid film formed on the surface of the material after squeezing the liquid; and
evaluating wettability of the material based on the imaged interference fringes.

3. A method for evaluating wettability of a material, the method comprising:
applying a gas jet to a surface of a material that is covered with a liquid so as to squeeze the liquid;
imaging an area in which the liquid is squeezed, and interference fringes of a liquid film formed on the surface of the material after squeezing the liquid;
calculating a correlation between the liquid squeezed area and the interference fringes based on the image data; and
evaluating wettability of the material based on the correlation.

4. The method according to any one of claims 1 to 3, wherein the imaging is performed while the gas jet is being applied to the material.

5. The method according to any one of claims 1 to 4, wherein the imaging is performed while the material is being irradiated with light, and
an optical axis of a light source that emits the light coincides with an optical axis of a means for performing the imaging or an axis of a nozzle that discharges the gas jet.

6. A method for producing a material, the method comprising:
evaluating wettability of the material by the method according to any one of claims 1 to 5.

7. A device for evaluating wettability of a material by the method according to any one of claims 1 to 5,
the device comprising:
a means for applying the gas jet;
a means for imaging interference fringes on the surface of the material where the liquid is squeezed by the application of the gas jet; and
a light source,
wherein the optical axis of the light source coincides with the optical axis of the imaging means or the axis of the nozzle.

8. A method for evaluating properties of a surface of a material, the method comprising:
applying a gas jet to a surface of a material that is covered with a liquid so as to squeeze the liquid;
imaging a surface of a liquid film formed on the surface of the material after squeezing the liquid;
stopping the application of the gas jet;
repeating a series of processes of applying the gas jet to squeeze the liquid, imaging of the surface of the liquid film, and stopping the application of the gas jet in this order; and
evaluating a change or durability of a treated film that is provided on the surface of the material based on the imaging thus performed.
